# EUROPEAN PATENT APPLICATION

(11) **EP 1 296 532 A2**
(43) Date of publication of application: **26.03.2003**
(21) Application number: 02256517.0
(22) Date of filing: 20.09.2002
(51) Int. Cl.: H04Q 9/04

(54) **Data exchange protocol**

(30) Priority: 20.09.2001 GB 0122674
(71) Applicant: E2V Technologies Limited, Chelmsford, Essex CM1 2QU (GB)
(72) Inventor: Pittock, Roger, Nr. Maldon, Essex CM9 8HT (GB)
(74) Representative: Hucker, Nerys

(57) **Abstract**

A method of communication between a base unit (B1) and a plurality of portable units (P1, P2, etc) comprises; allocating a first set of predetermined timeslots (contact slots) in a frame for communication between respective portable units and the base unit and allocating a second set of predetermined timeslots (event slots) in the frame to be available for communication between any of the portable units and the base unit. The time slots are arranged in the frame such that the timeslots of the first set alternate with the timeslots of the second set. The invention allows radio data exchange between portable radio units and a base unit on a single RF channel. Periodical reliable telemetry data throughput is maintained by means of communication in the first set of timeslots, yet unforeseen events may be communicated successfully and quickly in timeslots of the second set.

## Description

This invention relates to apparatus for, and methods of, communication by exchange of data, for example in radio telemetry.

Radio telemetry systems can be optimised either for accuracy/reliability of throughput or for speed of data throughput. Historically and typically these two requirements trade off against one another. The trade-off is particularly acute as the number of transmitting units in radio range of each other increases and the amount of data traffic increases. The invention proposes a method whereby both requirements are met more satisfactorily than hitherto. The method of the invention permits the radio range of units involved to be extended without sacrificing performance throughput.

Conventional telemetry systems involve means to communicate data over an RF channel between Portable Units (hereinafter 'PU') and a Base Unit (hereinafter 'BU'), either asynchronously or synchronously. The asynchronous method is most suited to impromptu communication of infrequent events, while synchronous transmission systems are most suited to regular scheduled update of information not changing substantially between scheduled time slots. The former risks radio clashes, progressively increasing in likelihood as more unscheduled events per period of unit time are to be catered for, while the latter does not readily allow for fast communication of impromptu events.

For both the synchronous and asynchronous communication systems, a Repeater Unit (hereinafter 'RU') may be used to relay data from one unit to another by repeating data it hears. For synchronous systems a plurality of RUs is feasible provided each is allocated unique time slots. A plurality of RUs in an asynchronous system increases clash probability dramatically, and needs managing to ensure units did not repeat messages they had already repeated.

The invention provides a method of communication between a base unit and a plurality of portable units, the method comprising; allocating a first set of predetermined timeslots in a frame for communication between respective predetermined ones of the portable units and the base unit; allocating a second set of predetermined timeslots in the frame to be available for communication between any of the portable units and the base unit; the time slots being arranged in the frame such that the timeslots of the first set alternate with the timeslots of the second set.

The invention allows radio data exchange between a plurality of portable radio units in an incident and a base unit in proximity to but not directly in the incident, on a single RF channel. Periodical reliable telemetry data throughput is maintained by means of communication in the first set of timeslots, yet unforeseen events may be communicated successfully and quickly in timeslots of the second set.

In the event that a plurality of base units are provided, the invention further comprises the steps of: each base unit generating respective frames for communicating with their respective portable units and each base unit negotiating the transmission of its frame within a communication cycle with the other base units. Communication between each base unit and its associated portable units is then as described above.

Preferably, at least one repeater unit is provided and arranged to receive and retransmit data to and from the base and portable units. The provision of repeater units permits both routine telemetry and event exchanges while the portable units are out of range of the base units. Furthermore, a plurality of systems may coexist without loss of performance.

The invention lends itself to inclusion in a communications system for search and rescue personnel or other emergency services personnel, for example firefighters. In such a system, the portable units are arranged to monitor equipment used by each firefighter. The base unit communicates with the portable units on a routine basis. However, should there be a fault with a set of equipment, the portable unit transmits an alarm to the base unit in one of the second set of timeslots.

This embodiment may be used to monitor, for example, a firefighter's breathing apparatus, and to indicate to the base unit should the level of available air fall below a predetermined level. The base unit can then signal to the firefighter that he should withdraw from the incident or exercise. Alternatively, the base unit may signal to others of the portable units in order to summon the assistance of other firefighters.

The invention shall now be described, by way of example, with reference to the accompanying drawings, in which: -
Figure 1 is a diagram of a time cycle according to a first embodiment of the invention;
Figure 2 is a diagram of a contact frame of a time cycle according to a second embodiment of the invention; and
Figure 3 is a diagram of a contact frame of a time cycle according to a third embodiment of the invention.

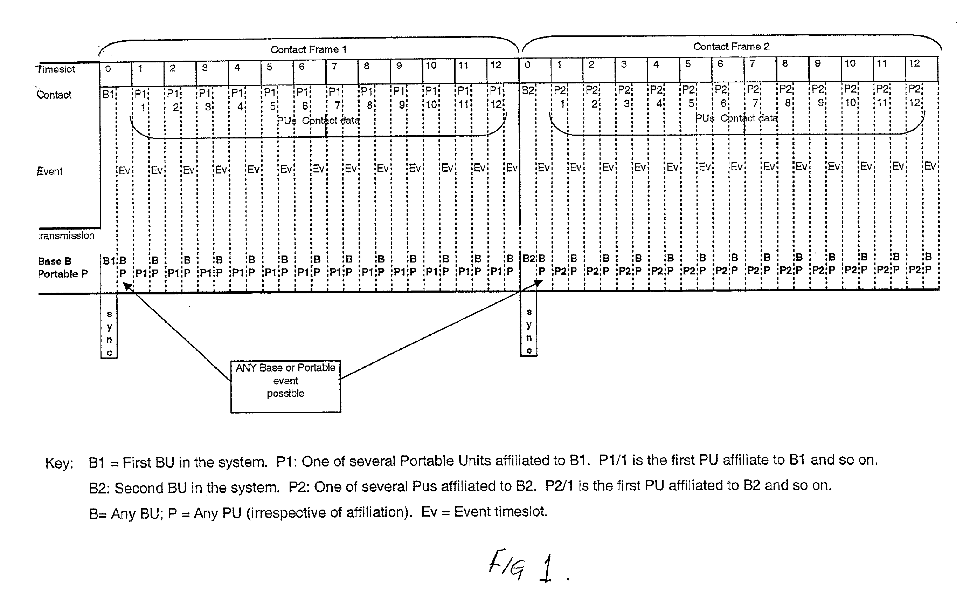

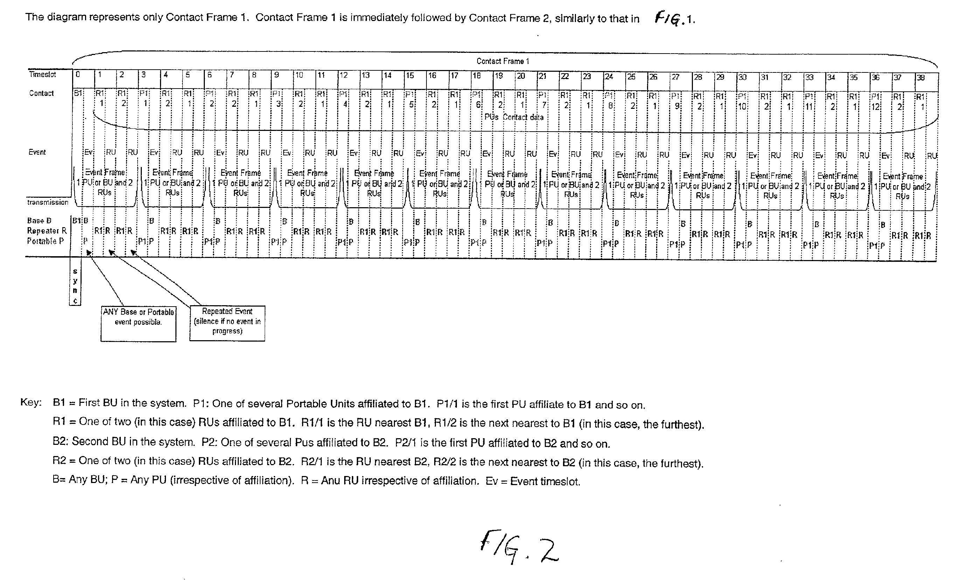

With reference to Figure 1, the method of the invention comprises the generation of one or more contact frames (hereinafter CF). Each CF is, in turn, subdivided into a first set of timeslots, hereinafter referred to as contact slots (CS), and a second set of timeslots, hereinafter referred to as event slots (ES). The CS and ES are arranged alternately within the frame. The CS are reserved/allocated timeslots for specific units, while ES are unallocated and may be used by any unit or units wishing to communicate either non-routine information or routine information on an urgent basis.

### Simple basic rules of operation:

1• When a BU is first powered on, it listens. If it hears no coherent messages on its channel, it creates the time frame.
2• If a BU hears coherent messages, it negotiates its CF with a pre-existing BU. This is done by an exchange of messages during consecutive ESs.
3• PUs negotiate a place with their respective BUs by logging on, as an exchange of messages during consecutive ESs.

In the first embodiment of the invention, the overall system capacity is preordained by the designer and the number of CFs in the cycle is chosen to match the number of BUs in the system. Within each CF, the number of CSs is chosen to match the maximum number of PUs affiliated to the BU. In the particular example shown in Figure 1, two BUs are catered for, each of which may have up to twelve affiliate PUs.

It follows that, on a routine basis, each BU has one opportunity in the cycle to poll its PUs en masse, both to advise each PU of its perceived status/data as gleaned during the previous cycle, and to enlist status updates in defined order, PU by PU, in the forthcoming CSs within that CF. The cycle time is preordained. It follows that every PU has a unique opportunity to transmit its data and status to its affiliate BU within the cycle.

For example, referring to Figure 1, the first PU affiliated to the first BU (B1) may routinely be polled by, and communicate with, B1 in the CS timeslot indicated as P1/1. As a further example, the sixth portable unit to log on to the second BU (B2) may communicate periodically in the P2/6 timeslot.

Interspersed within the pre-allocated CSs are freely available ESs. Any unit with anything out-of-the-ordinary to communicate may broadcast in any ES, each indicated as "Ev" in the drawings. The next ES is the space for the reply. It follows that if a unit wishes to broadcast an event, it should monitor the airwaves for the previous ES (which it will be doing anyway as a matter of course) and should transmit in the forthcoming ES, provided that the previous ES did not contain a message to which a response was solicited. In the case of the previous ES containing a message expecting a response, the unit wishing to broadcast a message shall miss an ES and then transmit in the next ES.

If the event message warrants a response and none is received, there is a possibility that the outbound message clashed with another, preventing clear reception by the intended recipient. That being so, a number of ESs later, the unit tries again, with the same proviso. The number of ESs missed between retries is determined at design stage and dependent on the maximum and typical number of event messages that are to be catered for in a given time. It also may have a small randomisation element built in, to take account of a "perfect" clash.

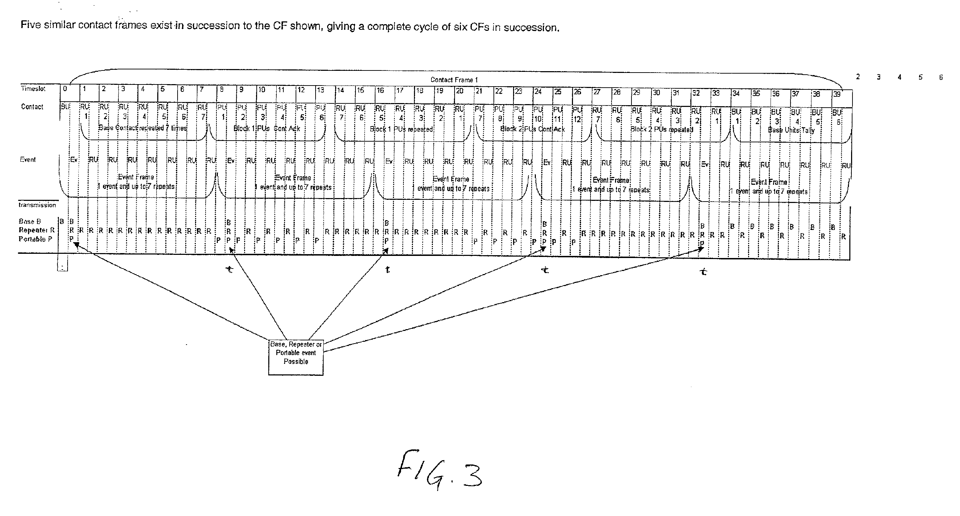

Figure 2 illustrates a second embodiment of the invention. In this embodiment, RUs are deployed at strategic positions to relay messages to/from PUs that might otherwise be out of range of the affiliate BU. For this to work, the maximum number of repeaters per BU needs to be defined and additional CSs and ESs allocated in each CF to accommodate the RUs. For a two-repeater system, for each CS of the first embodiment one now requires three CSs, the latter two in each triplet being allocated to the repeaters. Similarly, while ESs are still free-for-all, arranging these in triplets (in this example) ensures any non-clashing event is repeated.

Repeater assignment order is chosen to give maximum propagation into an incident. A unit may receive either the primary signal or one or more repeated signals. If any of these is coherent then the receiving unit acts as if the primary message was received directly. For systems where there is more than one BU and at least two of the BUs have affiliated RUs, a decision needs to be taken which RU set is to repeat an event. Provided the rule is consistent for all units in the system, several options are worthy of consideration. The primary mode would be for affiliate RUs to repeat PU and BU Event messages, irrespective of the timeslot in which the event was originated.

In another embodiment of the invention, illustrated in Figure 3, repeated data from the plurality of PUs in each CF is compressed prior to repeating. In this example, six BUs with a maximum of seven repeaters per BU is catered for. Event messages are always repeated uncompressed; it is important that all information of an event get through to its destination. However, the system may be arranged to compress information from a plurality of PUs into one RU contact message destined for the BU. This is so because the respective PU transmissions are in preordained positions and the RU message need not contain routine unit identity information. Such information is implicit by virtue of the transmission time with respect to the start of the CF. In this example, six PU contact messages are compressed into one Contact Repeat message; accordingly two groups of PU contact messages are required per contact frame for a system with twelve affiliate PUs per BU. The BU Tally slots at the end of the CF give an opportunity for each BU to confirm presence in the system within each Contact Frame.

Further compression may be obtained if necessary by restricting the amount of routine data that is repeated from the PUs during the contact frame. For instance, only a full compliment of data could come through the repeaters for any one unit, selected by the BU in its contact request message, with selected data only being repeated from the remaining PUs affiliated to the BU. By selecting a different PU for full data disclosure each cycle, a third level of priority is achieved, where the BU hearing a PU directly gleans a full transmission each CF, but where the PU is not in direct range of its BU, repeated ful telemetry data is only available every few CFs. The more PUs that are in direct range of the BU, the more frequently a full report can be obtained from those units not in direct range.

To summarise, the invention provides a half-duplex radio transmission method to allow one or more outstation units each to maintain telemetry and event data for a plurality of affiliate remote units, whereby routine clash-free contact data is provided to occur once per cycle for all remote units, with an ability to handle unforeseen events on an urgent basis. The latter does not interfere with the former.

Preferably, repeater units are accommodated in the time plan, thereby extending the range. Loss-free compression of telemetry data through one or more repeaters may be achieved during contact messages.

Loss free compression of telemetry data for one remote unit and lossy compression of telemetry data may be repeated for other units. The remote unit selected for loss-free compression may be decided in the contact request message.

One or more sub-system making up the telemetry system may be from an entirely separate source that can coexist with the current system (up to the overall maximum design capacity).

The transmission medium need not be rf, e.g., simplex serial cable, audio tones, ultrasonic tones etc. could be used.

## Claims

1. A method of communication between a base unit (B 1) and a plurality of portable units (P), the method comprising; allocating a first set of predetermined timeslots (P1/1, P1/2) in a frame for communication between respective predetermined ones of the portable units and the base unit; allocating a second set of predetermined timeslots (Ev) in the frame to be available for communication between any of the portable units and the base unit; the time slots being arranged in the frame such that the timeslots of the first set alternate with the timeslots of the second set.

2. A method of communication between a plurality of base units (B1, B2) and a plurality of portable units (P), each base unit being associated with predetermined ones (P1, P2) of the plurality of portable units, the method comprising; each base unit generating respective frames for communicating with their respective portable units; each base unit negotiating the transmission of its frame within a communication cycle with the other base units; the method further comprising, for each base unit; allocating a first set of predetermined timeslots (P1/1, P1/2, P2/1, P2/2) in a frame for communication between respective predetermined ones of the portable units and the base unit; allocating a second set of predetermined timeslots (Ev) in the frame to be available for communication between any of the portable units and any of the base units; the time slots being arranged in the frame such that the timeslots of the first set alternate with the timeslots of the second set.

3. A method as claimed in claim 1 or 2, in which communication between the or each base unit and the portable units is effected by means of radio transmission.

4. A method as claimed in claim 1, 2 or 3, in which the or each frame is a time division multiplex frame that is periodically transmitted from the or each base unit to the plurality of portable units associated with the base unit.

5. A method as claimed in any previous claim, in which the or each base unit and the portable units communicate on the same channel.

6. A method as claimed in any one of claims 1 to 5, in which, when a unit wishes to transmit data in one of the second set of timeslots, it monitors data sent in the next timeslot of the second set and then transmits in a subsequent timeslot of the second set.

7. A method as claimed in any one of claims 1 to 5, in which, when a unit wishes to transmit data in one of the second set of timeslots, it monitors data sent in the next timeslot of the second set and, if the data sent in that timeslot includes an indication that a response is required, the unit waits for a predetermined period before transmitting in a subsequent timeslot of the second set.

8. A method as claimed in any previous claim in which, when a unit transmits data in one of the second set of timeslots and the data includes an indication that a response is required, the unit is arranged to wait for a predetermined period and, if a response is not received, retransmits the data in a subsequent one of the second set of time slots.

9. A method as claimed in any previous claim, in which at least one repeater unit (R) is arranged to receive and retransmit data between a base unit and portable units, the or each repeater unit being allocated predetermined timeslots (R 1/1, R 1/2) within the frame.

10. A method as claimed in any previous claim, further comprising the step of compressing data to be transmitted in ones of the first set of timeslots.

11. A method as claimed in any previous claim, in which the portable units are arranged to receive data from equipment carried by a firefighter and to transmit that data in one of the first set of timeslots to the base unit.

12. A method as claimed in claim 11, in which each portable unit is arranged to detect a predetermined condition of the equipment.

13. A method as claimed in claim 12, in which, when the portable unit detects the predetermined condition, it transmits predetermined data to the base unit in one of the second set of timeslots.

14. A method as claimed in claim 13, in which the predetermined data includes an alarm signal.

15. A method as claimed in any one of claims 11 to 14, in which the equipment is breathing apparatus for the firefighter.
